# EUROPEAN PATENT SPECIFICATION

(11) **EP 4 325 462 B1**
(45) Date of publication and mention of the grant of the patent: **29.01.2025**
(21) Application number: 22190930.2
(22) Date of filing: 18.08.2022
(51) Int. Cl.: G08G 1/16, B60W 30/09, B60W 30/095, G06V 20/62, G06V 20/58

(54) **METHOD FOR DETECTING A WIDE TURN MANEUVER OF A VEHICLE, METHOD FOR OPERATING AN EGO-VEHICLE, DATA PROCESSING APPARATUS, COMPUTER PROGRAM, AND COMPUTER-READABLE STORAGE MEDIUM**
VERFAHREN ZUM ERKENNEN EINES BREITEN WENDEMANÖVERS EINES FAHRZEUGS, VERFAHREN ZUM BETREIBEN EINES EGO-FAHRZEUGS, DATENVERARBEITUNGSVORRICHTUNG, COMPUTERPROGRAMM UND COMPUTERLESBARES SPEICHERMEDIUM
PROCÉDÉ DE DÉTECTION D'UNE MANOEUVRE DE VIRAGE LARGE D'UN VÉHICULE, PROCÉDÉ DE FONCTIONNEMENT D'UN VÉHICULE AUTONOME, APPAREIL DE TRAITEMENT DE DONNÉES, PROGRAMME INFORMATIQUE ET SUPPORT DE STOCKAGE LISIBLE PAR ORDINATEUR

(43) Date of publication of application: 21.02.2024
(73) Proprietor: Volvo Car Corporation, 405 31 Göteborg (SE)
(72) Inventor: PEREZ BARRERA, Oswaldo, 40531 Göteborg (SE); LENNARTSSON, Anders, 40531 Göteborg (SE)
(74) Representative: Maiwald GmbH

(56) References cited:
- EP-A1- 1 528 526
- DE-A1- 102018 214 018
- US-A1- 2020 398 847

## Description

The present disclosure relates to a method for detecting a wide turn maneuver of a vehicle travelling on a road segment ahead of an ego-vehicle.

Moreover, the present disclosure is directed to a method for operating an ego-vehicle.

The present disclosure further relates to a data processing apparatus, a computer program, and a computer-readable storage medium.

In this context, a wide turn maneuver is understood as a manner of driving around a corner, wherein the vehicle performing the wide turn maneuver is not using the outermost lane as a starting point. This means that when taking a right, the vehicle performing the wide turn maneuver is not starting from the rightmost lane, but for example from the second lane from the right. When taking a left, the vehicle performing the wide turn maneuver is not starting from the leftmost lane, but for example from the second lane from the left. Such a wide turn maneuver is especially performed by comparatively long vehicles, such as trucks or buses. In doing so, the comparatively long vehicle, is able to drive around comparatively narrow corners.

It is obvious that performing a wide turn maneuver is only possible, if the outermost, i.e. the rightmost or leftmost, lane is free from any other traffic participants. In other words, when performing a wide turn maneuver to the right, the rightmost lane needs to be free. When performing a wide turn maneuver to the left, the leftmost lane needs to be free.

Since it is difficult for other traffic participants to recognize that a vehicle ahead of them is starting to perform a wide turn maneuver, such maneuvers may easily lead to accidents which result from the fact that a traffic participant has not recognized that a vehicle in front of it is performing a wide turn maneuver and has been driving on the rightmost or leftmost lane. At the same time, a driver of the vehicle performing the wide turn maneuver has overlooked this traffic participant or was not able to see the traffic participant due to the blind spot phenomenon.

It is noted, that the above explanations especially apply to partially or fully autonomous vehicles. For such vehicles it is particularly difficult to detect that a vehicle ahead of them is performing a wide turn maneuver.

On a more general level, DE 10 2018 214 018 A1 discloses a device, method and system for warning a driver of a vehicle which is making a turn. EP 1 528 526 A1 shows a system for detecting a mobile unit relying on the exchange of signals between vehicles.

Consequently, it is an objective of the present disclosure to improve the detection of a wide turn maneuver.

The problem is at least partially solved or alleviated by the subject matter of the independent claims of the present disclosure, wherein further examples are incorporated in the dependent claims.

According to a first aspect, there is provided a method for detecting a wide turn maneuver of a vehicle travelling on a road segment ahead of an ego-vehicle according to independent claim 1.

The method is performed on the ego-vehicle or at least from the perspective of the ego-vehicle. It is noted that the method may be abandoned if a turn signal status is detected which describes that none of the turn signals or both of the turn signals are activated. Moreover, the method may be abandoned if the lane status describes that the vehicle is traveling on the ego-lane. Also, the method may be abandoned if the turn distance information exceeds or equals the turn distance threshold. In this context, the turn distance information may be received from a navigation unit. The turn distance threshold describes a distance to the upcoming turn, wherein within this distance a wide turn maneuver is considered to be possible. Using the turn distance threshold, a lane change may be distinguished over a potential wide turn maneuver. In simplified words, if the vehicle is far away from the next turn, a wide turn maneuver must not be determined. Instead, a lane change may be determined. Using this method, a wide turn maneuver of a vehicle may be detected with high reliability. This enhances road safety.

In the context of the present disclosure, activating the turn signal is considered to be a first step of a wide turn maneuver.

According to an example, the method further comprises detecting an identification feature of the vehicle and deriving a type of the vehicle. Additionally or alternatively, a length of the vehicle may be derived based on the identification feature. Only if the type of the vehicle corresponds to a predefined type or the length of the vehicle exceeds a length threshold it is determined that the vehicle is performing a wide turn maneuver. The predefined types may include trucks, semi-trucks and buses. In an example, the identification feature is an alphanumeric string being displayed on a license plate of the vehicle. The associated information relating to the type of the vehicle order length of the vehicle may be retrieved from a central database which may be for example designed as a cloud service. To this end, a wireless data connection, e.g. over the Internet, may be established. In the present example, the fact is used, that only vehicles having a comparatively big length or being of certain types usually perform wide turn maneuvers. Consequently, it may be excluded that a wide turn maneuver is determined for a type of vehicle or a vehicle having a comparatively short length. Such vehicles do not need to perform a wide turn maneuver. They can use a standard turn maneuver. This further enhances the reliability of detecting a wide turn maneuver.

In a further example, the method comprises comparing the derived length of the vehicle to a received turn distance information. The performance of a wide turn maneuver is only determined if a ratio of the derived length of the vehicle to the received turn distance information exceeds a predefined ratio threshold. This means that the proximity of the vehicle to the location of the turn is measured in terms of the vehicle length. This offers a precise estimation whether the vehicle is performing a wide turn maneuver or a different type of maneuver, e.g. a lane change.

In another example, the method further comprises detecting a speed of the vehicle and/or a speed gradient of the vehicle. The performance of a wide turn maneuver is only determined if the detected speed is inferior to a speed threshold and/or if the speed gradient exceeds a speed gradient threshold respectively. In this context, it is known that a vehicle needs to slow down in order to perform a wide turn maneuver. Consequently, a wide turn maneuver may be excluded, if the vehicle travels at a comparatively high speed, i.e. a speed exceeding the speed threshold. Moreover, the fact that a vehicle is slowing down may be detected by evaluating a speed gradient. It is noted that in this context, the speed gradient is to be understood in absolute terms. This means that a high speed gradient may relate to a high acceleration or high deceleration. However, in the present disclosure, high acceleration is not relevant since usually the other indicators of a wide turn maneuver, e.g. activating the turn lights, do not occur in combination with a high acceleration. Consequently, using the speed gradient, it may be determined that the vehicle is slowing down, if the speed gradient exceeds a speed gradient threshold. This is also an indication of a wide turn maneuver. Consequently, a wide turn maneuver may be detected with high reliability.

In a further example, a wide turn maneuver may only be determined in a case in which the speed of the vehicle is comparatively low and decreasing.

In an example, the method further comprises receiving an area-specific turn possibility status describing whether in a specific area, there is a possibility to perform a wide turn. The performance of a wide turn maneuver is only determined if the area-specific turn possibility status is positive. The area specific turn possibility status may be received from a cloud server or a central database, e.g. via a wireless data connection, for example over the Internet. Using the area specific turn possibility status, a wide turn maneuver may only be detected in areas where generally a wide turn maneuver is possible. This may be the case for roads having two or more lanes in one direction. To the contrary, in areas where a wide turn maneuver generally is not possible, a wide turn maneuver will not be determined. This may for example be the case for small villages having narrow single lane roads only. Consequently, the accuracy of the determination of a wide turn maneuver is further increased.

In an example, there is provided a method for operating an ego-vehicle. This method comprises executing the method for detecting a wide turn maneuver of a vehicle according to the present disclosure. Thus, the ego-vehicle may determine that a vehicle ahead of it is performing a wide turn maneuver. This determination may happen with high precision and reliability. This allows the ego-vehicle to react appropriately. This means that the ego-vehicle is able to react in a way that avoids accidents. Especially, the ego-vehicle is able to avoid driving into road spaces that are needed for the performance of the wide turn maneuver. Additionally a blind spot area of the vehicle performing the wide turn maneuver may be avoided.

In an example, the method further comprises triggering the keeping a safety distance with respect to the vehicle if a wide turn maneuver is detected. The safety distance may be kept while driving and while being at a standing still. Keeping a safety distance also may imply not to perform lane changes and not to perform overtaking maneuvers. Consequently, the vehicle may safely perform a wide turn maneuver and the ego-vehicle is kept in a safe state.

In an example, the safety distance may be triggered for a predefined time. Put otherwise, a timer may be set and after the lapse of the predefined time normal driving will be continued. This may imply that the method for detecting a wide turn maneuver is started from the beginning. Consequently, traffic flow will not be unduly restricted by an ego-vehicle having detected a vehicle performing a wide turn maneuver.

In an example, the method further comprises transmitting a wide turn status information to a central control entity or to another vehicle, if a wide turn maneuver is detected. In other words, other traffic participants may be informed that the vehicle is performing a wide turn maneuver. The information may be transmitted directly to the other traffic participants, e.g. other vehicles, or via the central control entity. Optionally an identification feature of the vehicle performing the wide turn maneuver or the ego-vehicle may be transmitted. Consequently, other vehicles are informed and can react to the detected wide turn maneuver in a safe manner.

According to an example, the method further comprises triggering a warning activity, if a wide turn maneuver is detected. In doing so, other traffic participants will slow down and/or drive with increased caution. The warning activity may include honking or turning the hazard lights on.

In an example, the method further comprises detecting a traffic light and a corresponding traffic light status. The method additionally comprises triggering a standstill when the traffic light turns from red to green, if it is determined that the vehicle is performing a wide turn maneuver. This example relates to a situation wherein the beginning of a wide turn maneuver is detected in a situation where the vehicle and the ego-vehicle are waiting at a red traffic light. By staying in a standstill, the ego-vehicle may let the vehicle performing the right turn maneuver pass. Thus, the wide turn maneuver may be performed in a safe manner. In this context, the traffic light detection may use machine vision and/or data of a navigation system.

In an example, the standstill may be triggered for a predefined time. As before, a timer may be set and after the lapse of the predefined time normal driving will be continued. This may imply that the method for detecting a wide turn maneuver is started from the beginning. Consequently, traffic flow will not be unduly restricted by an ego-vehicle having detected a vehicle performing a wide turn maneuver.

The above-described methods may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus according to independent claim 13. Consequently, using such a data processing apparatus, a wide turn maneuver may be detected with high reliability and/or an ego-vehicle is able to appropriately react thereto. Altogether, road safety is enhanced.

According to a third aspect, there is provided a computer program according to independent claim 14. Using such a computer program offers the possibility to reliably detect a wide turn maneuver. An ego-vehicle may react thereto in a safe manner.

According to a fourth aspect, there is provided a computer-readable storage medium according to independent claim 15. Also using such a computer-readable storage medium leads to a reliable detection of a wide turn maneuver. An ego-vehicle may therefore react appropriately and safely thereto.

It should be noted that the above examples may be combined with each other irrespective of the aspect involved. Accordingly, the method may be combined with structural features and, likewise, the apparatus and the system may be combined with features described above with regard to the method.

These and other aspects of the present disclosure will become apparent from and elucidated with reference to the examples described hereinafter.

Examples of the disclosure will be described in the following with reference to the following drawings.
- Figure 1: illustrates a first vehicle performing a wide turn maneuver and a second vehicle colliding with the first vehicle since it is located in a space that is needed for the wide turn maneuver,
- Figure 2: illustrates steps of a method for operating an ego-vehicle according to the present disclosure and a method for detecting a wide turn maneuver according to the present disclosure,
- Figure 3: illustrates a first exemplary situation in which the methods according to the present disclosure are applied, and
- Figure 4: illustrates a second exemplary situation in which the methods according to the present disclosure are applied.

The Figures are merely schematic representations and serve only to illustrate examples of the disclosure. Identical or equivalent elements are in principle provided with the same reference signs.

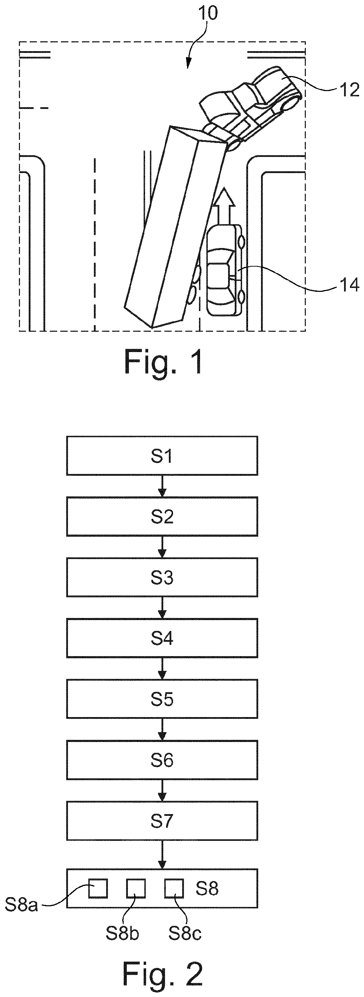

Figure 1 shows a street crossing 10. A first vehicle 12, which is a truck in the example of Figure 1, and a second vehicle 14, which is a standard car in the example of Figure 1, are traveling on the streets forming the street crossing 10.

The first vehicle 12 is performing a wide turn maneuver. This means that, in the perspective of Figure 1, the first vehicle 12 drives on the second lane from the right in order to be able to take a right at the street crossing 10. This is necessary because the first vehicle 12 is comparatively long. If the first vehicle 12 would travel on the rightmost lane, it would not be possible to take a right at the street crossing 10.

As is visible from Figure 1, when performing the wide turn maneuver, the first vehicle 12 needs both the rightmost lane and the second lane from the right. However, in the illustration of Figure 1, the second vehicle 14 was unable to detect that the first vehicle 12 is performing a wide turn maneuver. This leads to an accident because the second vehicle 14 is located in a space which is actually needed by the first vehicle 12 in order to perform the right turn maneuver. In the present example, the second vehicle 14 is additionally in a blind spot of the first vehicle 12.

Such accidents may be avoided by using a method for operating an ego-vehicle 16, wherein this method comprises executing a method for detecting a wide turn maneuver of a vehicle 18.

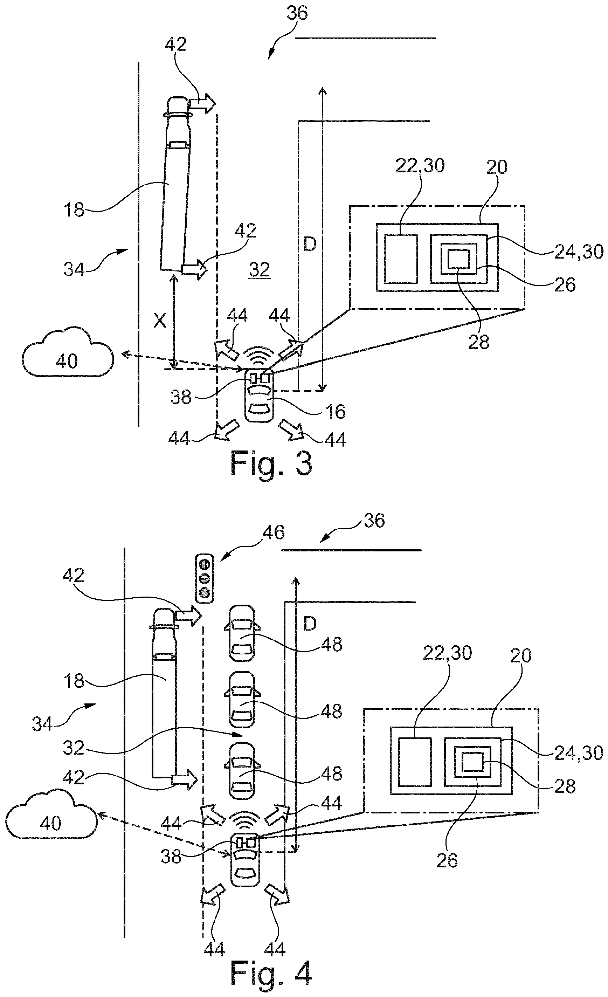

These methods will be explained in the following with reference to Figures 2 and 3.

For the ease of explanation, the vehicle which is operated by the method mentioned above will be designated as an ego-vehicle 16. In the situation of Figure 1, the ego-vehicle 16 would corresponds to the second vehicle 14. The vehicle that is performing the right turn maneuver will simply be referred to as vehicle 18. In the situation of Figure 1, the vehicle 18 would correspond to the first vehicle 12.

The ego-vehicle 16 comprises a data processing apparatus 20 with a data processing unit 22 and a data storage unit 24.

The data storage unit 24 comprises a computer-readable storage medium 26. On the computer-readable storage medium 26, a computer program 28 is stored. Both the computer-readable storage medium 26 and the computer program 28 comprising instructions which, when being executed by a computer, here the data processing unit 22, cause the computer, i.e. the data processing unit 22, to carry out the above methods.

Consequently, the data processing unit 22 and the data storage unit 24 may also be designated as means 30 for carrying out the above methods.

In the example of Figures 2 and 3, the ego-vehicle 16 is a fully autonomous vehicle. It travels on a known ego-lane 32 within a road segment 34.

The vehicle 18, which again is a truck, travels on the same road segment 34 ahead of the ego-vehicle 16. At an upper end of the road segment 34, there is a T-intersection 36.

Both the ego-vehicle 16 and the vehicle 18 are approaching the T-intersection 36.

In a first step S1 an identification feature of the vehicle 18 is detected.

In the present example, a license plate of the vehicle 18 is detected by using a camera 38 being installed in the ego-vehicle 16.

The camera 38 is connected to the data processing apparatus 20. Using the data processing apparatus, an alphanumeric identification code of the vehicle 18 may be extracted from the image captured by the camera 38.

Subsequently, the ego-vehicle 16 sends a request to a central control entity 40. The request comprises a demand for a vehicle type being associated with the determined alphanumeric identification code and a length of the vehicle being associated with the alphanumeric identification code.

In response to the request, a vehicle type, which is "truck" in the present example, and a corresponding length is received at the data processing apparatus 20 from the central control entity 40. In the present example, the length is 16 m.

Subsequently, the received vehicle type and the received length are compared to predefined types of vehicles and a length threshold respectively. These two pieces of information are stored on the data storage unit 24. The predefined types of vehicles include trucks. The length threshold is 7 m.

Based on this determination, the method is continued since both the type of the vehicle 18 and the corresponding length do not exclude that the vehicle 18 might be in a situation to perform a wide turn maneuver.

In a second step S2, the ego-vehicle 16 receives or reads an area-specific turn possibility status. The area-specific turn possibility status may be received from the central control entity 40 or may be stored on the data storage unit 22. In the latter case, the data storage unit 22 may form part of a navigation system.

The area-specific turn possibility status describes whether in the specific area, where the ego-vehicle 16 is currently located, there is a general possibility to perform a wide turn maneuver.

In the present example, the area-specific turn possibility status is positive. Thus, the method is continued. In a case, in which the area-specific turn possibility status is negative, i.e. in a case where there is no possibility to perform a wide turn maneuver, the method is abandoned.

Subsequently, a third step S3 is performed. In this step S3, the ego-vehicle 16 is detecting a turn signal status of the vehicle 18.

To this end, the camera 38 of the ego-vehicle 16 may be used again.

The turn signal status describes whether the left turn signal only, the right turn signal only, both the left turn signal and the right turn signal or none of the turn signals are activated.

In the example of Figure 3, it is determined that the right turn signal only is activated. This is indicated by two arrows 42.

It is noted, that the method is only continued in cases in which either the left turn signal only or the order right turn signal only is activated. In all other cases, the method is abandoned since having activated both the left and the right turn signal or having activated none of the turn signals is not considered to be indicative of a wide turn maneuver.

In a fourth step S4, a lane status of the vehicle 18 is detected. To this end, also the camera 38 may be used.

The lane status describes a lane of the road segment 34 on which the vehicle 18 is traveling. The lane status is determined with reference to the ego-lane 32.

In the example of Figure 3, it is determined that the vehicle 18 is traveling on a lane to the left of the ego-lane 32.

In a subsequent fifth step S5, a speed of the vehicle 18 is detected. This may also be done by using the camera 38.

The detected speed is compared to a speed threshold being provided on the data storage unit 24.

In the present example, the determined speed may be 18 km/h and they speed threshold may be 20 km/h.

The method is continued, if the detected speed is inferior to the the speed threshold. This is the case in the present example. In the opposite case, the method is abandoned since the detected speed is considered to be too high for the performance of a wide turn maneuver.

It is noted that additionally or alternatively to the speed, also a speed gradient may be determined and the method may only be continued in cases in which a deceleration of the vehicle is determined.

Thereafter, in a sixth step S6, a turn distance information D describing a distance to an upcoming turn is received. In the example of Figure 3, the upcoming turn is the T-intersection 36. The turn distance information D may be received from the central control entity or from the data processing apparatus 20 forming part of a navigation system.

Based thereon, a ratio of the received length of the vehicle 18 to the received turn distance information D is calculated and compared to a predefined ratio threshold.

In the present example, the predefined ratio threshold is 0.1 and the calculated ratio is 0.6. This means that in terms of the length of the vehicle 18, the distance to the upcoming turn is short. Consequently, the method is continued since in such a situation a wide turn maneuver is possible. If the calculated ratio were to be below the predefined ratio threshold of 0.1, the method would be abandoned since in terms of the length of the vehicle 18, the distance to the upcoming turn would be considered too far.

In an alternative, the received turn distance information D may as well be simply compared to a distance threshold. The turn distance threshold describes a distance from the upcoming turn within which a wide turn maneuver would be possible.

Thereafter, in a seventh step S7, based on the outcomes of the steps mentioned before, it is determined that the vehicle 18 is performing a wide turn maneuver.

It is noted that in the example of Figure 3 the vehicle 18 is traveling on a lane to the left of the ego-vehicle 16 and the right turn signals only are activated. Of course, the opposite situation is also possible, i.e. the vehicle 18 is traveling on a lane to the right of the ego-vehicle 16 and the left turn signals only are activated.

Following this determination, the ego-vehicle 16 can react appropriately in a step S8.

This step comprises three sub-steps. In a first sub-step S8a, the ego-vehicle 16 is keeping a safety distance X with respect to the vehicle 18.

Moreover, the ego-vehicle 16 is performing a warning activity in a sub-step S8b. In the present example, the ego-vehicle 16 is activating all its turn lights. This is illustrated by arrows 44.

Additionally, in a sub-step S8c, the ego-vehicle 16 transmits a wide turn status information to the central control entity 40. The wide turn status information indicates the current position of the ego-vehicle 16 and the fact that at this position the vehicle 18 is performing a wide turn maneuver. This information may be transmitted to other traffic participants by the central control entity 40.

In the present example, the activities of step S8 are performed for a predefined time of 20 seconds. After this time has elapsed, the ego-vehicle 16 continues driving normally. This, of course, implies that the methods of the present disclosure are started anew.

Figure 4 illustrates a further exemplary situation. The position of the vehicle 18 and the ego-vehicle 16 is the same as in the example of Figure 3. Also the determination results of steps S1, S2, S3, S4 and S6 are the same as has been explained in connection with the example of Figure 3.

In step S5, it is determined that the vehicle 18 is at a standstill. Thus, also the outcome of step S5 corresponds to the outcome as has been explained in connection with Figure 3.

Consequently, also in the example of Figure 4 it is determined that the vehicle 18 is performing a wide turn maneuver in a step S7.

However, in the situation of Figure 4 the ego-vehicle 16 additionally detects a traffic light 46 and a corresponding traffic light status which indicates that the traffic light is red.

Because of that, a different sub-step S8a is performed. Now, the ego-vehicle 16 stays in a standstill when the traffic light 46 turns from red to green.

In doing so, other vehicles 48 can continue driving normally thereby liberating the road space that is necessary for vehicle 18 to perform the wide turn maneuver. The ego-vehicle 16 will not enter this road space. Consequently, vehicle 18 can perform the wide turn maneuver in a safe manner.

The ego-vehicle 16 will stay in the standstill for a predefined time of 30 seconds. Then it will continue driving normally which also includes the performance of the methods of the present disclosure.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: street crossing
- 12: first vehicle
- 14: second vehicle
- 16: ego-vehicle
- 18: vehicle
- 20: data processing apparatus
- 22: data processing unit
- 24: data storage unit
- 26: computer-readable storage medium
- 28: computer program
- 30: means for carrying out a method for detecting a wide turn maneuver and for carrying out a method for operating an ego-vehicle
- 32: ego-lane
- 34: road segment
- 36: T-intersection
- 38: camera
- 40: central control entity
- 42: arrows
- 44: arrows
- 46: traffic light
- 48: other vehicle

- D: turn distance information
- S1: first step
- S2: second step
- S3: third step
- S4: fourth step
- S5: fifth step
- S6: sixth step
- S7: seventh step
- S8: eight step
- S8a: first sub-step
- S8b: second sub-step
- S8c: third sub-step
- X: safety distance

## Claims

1. A computer-implemented method for detecting a wide turn maneuver of a vehicle (18) travelling on a road segment (34) ahead of an ego-vehicle (16) which is travelling on a known ego-lane (32) of the same road segment (34), the wide turn maneuver being a right turning maneuver starting outside the rightmost lane or the wide turning maneuver being a left turning maneuver starting outside the leftmost lane, the method is performed on the ego-vehicle (16) or from the perspective of the ego-vehicle (16) and the method comprising
- detecting a turn signal status of the vehicle (18), wherein the turn signal status describes whether the left turn signal only, the right turn signal only, both the left turn signal and the right turn signal or none of the turn signals is/are activated (S3),
- detecting a lane status of the vehicle (18), wherein the lane status describes a lane of the road segment (34) on which the vehicle (18) is travelling (S4),
- receiving a turn distance information (D) describing a distance to an upcoming turn and comparing the turn distance information (D) to a turn distance threshold (S6),
- determining that the vehicle (18) is performing the wide turn maneuver (S7),
o if the turn signal status describes that the left turn signal only is activated and the lane status describes that the vehicle (18) is travelling on a lane being located on the right of the ego-lane (32) and the turn distance information (D) is inferior to the turn distance threshold, or
o if the turn signal status describes that the right turn signal only is activated and the lane status describes that the vehicle (18) is travelling on a lane being located on the left of the ego-lane (32) and the turn distance information (D) is inferior to the turn distance threshold.

2. The method of claim 1, further comprising detecting an identification feature of the vehicle (18) and deriving a type of the vehicle (18) and/or a length of the vehicle (18) based on the identification feature (S1), wherein the performance of the wide turn maneuver is only determined if the type of the vehicle (18) corresponds to a predefined type or the length of the vehicle (18) exceeds a length threshold.

3. The method of claim 2, further comprising comparing the derived length of the vehicle (18) to the received turn distance information (D), wherein the performance of the wide turn maneuver is only determined if a ratio of the derived length of the vehicle (18) to the received turn distance information (D) exceeds a predefined ratio threshold.

4. The method of any one of the preceding claims, further comprising detecting a speed of the vehicle (18) and/or a speed gradient of the vehicle (S5), wherein the performance of a wide turn maneuver is only determined if the detected speed is inferior to a speed threshold and/or the speed gradient exceeds a speed gradient threshold respectively.

5. The method of any one of the preceding claims, further comprising receiving an area-specific turn possibility status describing whether in a specific area, there is a possibility to perform the wide turn maneuver (S2), wherein the performance of the wide turn maneuver is only determined if the area-specific turn possibility status is positive.

6. A method for operating an ego-vehicle (16) comprising executing the method for detecting the wide turn maneuver of a vehicle (18) according to any one of the preceding claims.

7. The method of claim 6, further comprising triggering a keeping a safety distance (X) with respect to the vehicle (18) if the wide turn maneuver is detected (S8, S8a).

8. The method of claim 7, wherein the safety distance (X) is triggered for a predefined time.

9. The method of any one of claims 6 to 8, further comprising transmitting a wide turn status information to a central control entity (40) or another vehicle , if the wide turn maneuver is detected (S8, S8c).

10. The method of any one of claims 6 to 9, further comprising triggering a warning activity, if the wide turn maneuver is detected (S8, S8b).

11. The method of any one of claims 6 to 10, further comprising detecting a traffic light (46) and a corresponding traffic light status, and triggering a standstill when the traffic light (46) turns from red to green if the wide turn maneuver is detected.

12. The method of claim 11, wherein the standstill is triggered for a predefined time.

13. A data processing apparatus (20) comprising means (30) for carrying out at least one of the methods of the preceding claims.

14. A computer program (28) comprising instructions which, when the computer program (28) is executed by a computer, cause the computer to carry out at least one of the methods according to claims 1 to 12.

15. A computer-readable storage medium (26) comprising instructions which, when executed by a computer, cause the computer to carry out at least one of the methods according to claims 1 to 12.

## Patentansprüche

1. Computerimplementiertes Verfahren zum Detektieren eines weit ausholenden Abbiegemanövers eines Fahrzeugs (18), das auf einem Straßensegment (34) vor einem eigenen Fahrzeug (16) fährt, das auf einer bekannten eigenen Fahrspur (32) desselben Straßensegments (34) fährt, wobei das weit ausholende Abbiegemanöver ein Rechtsabbiegemanöver ist, das außerhalb der äußerst rechten Fahrspur beginnt, oder das weit ausholende Abbiegemanöver ein Linksabbiegemanöver ist, das außerhalb der äußerst linken Fahrspur beginnt, wobei das Verfahren in dem eigenen Fahrzeug (16) oder aus der Perspektive des eigenen Fahrzeugs (16) durchgeführt wird, und das Verfahren umfasst:
- Detektieren eines Blinkerstatus des Fahrzeugs (18), wobei der Blinkerstatus beschreibt, ob nur der linke Blinker, nur der rechte Blinker, sowohl der linke Blinker als auch der rechte Blinker oder keiner der Blinker aktiviert ist (S3),
- Detektieren eines Fahrspurstatus des Fahrzeugs (18), wobei der Fahrspurstatus eine Fahrspur des Straßensegments (34) beschreibt, auf der das Fahrzeug (18) fährt (S4),
- Empfangen einer Abbiegedistanzinformation (D), die eine Distanz zu einer bevorstehenden Abbiegung beschreibt, und Vergleichen der Abbiegedistanzinformation (D) mit einer Abbiegedistanzschwelle (S6),
- Bestimmen, dass das Fahrzeug (18) das weit ausholende Abbiegemanöver durchführt (S7),
∘ falls der Blinkerstatus beschreibt, dass nur der linke Blinker aktiviert ist, und der Fahrspurstatus beschreibt, dass das Fahrzeug (18) auf einer Fahrspur fährt, die sich rechts von der eigenen Spur (32) befindet, und die Abbiegedistanzinformation (D) kleiner ist als die Abbiegedistanzschwelle, oder
o falls der Blinkerstatus beschreibt, dass nur der rechte Blinker aktiviert ist, und der Fahrspurstatus beschreibt, dass das Fahrzeug (18) auf einer Fahrspur fährt, die sich links von der eigenen Spur (32) befindet, und die Abbiegedistanzinformation (D) kleiner ist als die Abbiegedistanzschwelle.

2. Verfahren nach Anspruch 1, des Weiteren umfassend das Detektieren eines Identifikationsmerkmals des Fahrzeugs (18) und das Ableiten eines Typs des Fahrzeugs (18) und/oder einer Länge des Fahrzeugs (18) auf der Grundlage des Identifikationsmerkmals (S1), wobei die Durchführung des weit ausholenden Abbiegemanövers nur bestimmt wird, falls der Typ des Fahrzeugs (18) einem vordefinierten Typ entspricht oder die Länge des Fahrzeugs (18) eine Längenschwelle überschreitet.

3. Verfahren nach Anspruch 2, des Weiteren umfassend das Vergleichen der abgeleiteten Länge des Fahrzeugs (18) mit der empfangenen Abbiegedistanzinformation (D), wobei die Durchführung des weit ausholenden Abbiegemanövers nur bestimmt wird, falls ein Verhältnis der abgeleiteten Länge des Fahrzeugs (18) zu der empfangenen Abbiegedistanzinformation (D) eine vordefinierte Verhältnisschwelle überschreitet.

4. Verfahren nach einem der vorangehenden Ansprüche, des Weiteren umfassend das Detektieren einer Geschwindigkeit des Fahrzeugs (18) und/oder eines Geschwindigkeitsgradienten des Fahrzeugs (S5), wobei die Durchführung eines weit ausholenden Abbiegemanövers nur bestimmt wird, falls die detektierte Geschwindigkeit eine Geschwindigkeitsschwelle unterschreitet und/oder der Geschwindigkeitsgradient eine Geschwindigkeitsgradientenschwelle überschreitet.

5. Verfahren nach einem der vorangehenden Ansprüche, des Weiteren umfassend das Empfangen eines bereichsspezifischen Abbiegemöglichkeitsstatus, der beschreibt, ob in einem spezifischen Bereich eine Möglichkeit besteht, das weit ausholende Abbiegemanöver durchzuführen (S2), wobei die Durchführung des weit ausholenden Abbiegemanövers nur bestimmt wird, falls der bereichsspezifische Abbiegemöglichkeitsstatus positiv ist.

6. Verfahren zum Betreiben eines eigenen Fahrzeugs (16), umfassend das Ausführen des Verfahrens zum Detektieren des weit ausholenden Abbiegemanövers eines Fahrzeugs (18) nach einem der vorangehenden Ansprüche.

7. Verfahren nach Anspruch 6, des Weiteren umfassend das Auslösen eines Haltens eines Sicherheitsabstands (X) in Bezug auf das Fahrzeug (18), falls das weit ausholende Abbiegemanöver detektiert wird (S8, S8a).

8. Verfahren nach Anspruch 7, wobei der Sicherheitsabstand (X) für eine vordefinierte Zeit ausgelöst wird.

9. Verfahren nach einem der Ansprüche 6 bis 8, des Weiteren umfassend das Senden einer Information zum Status des weit ausholenden Abbiegens an eine zentrale Steuerungsentität (40) oder ein anderes Fahrzeug, falls das weit ausholende Abbiegemanöver detektiert wird (S8, S8c).

10. Verfahren nach einem der Ansprüche 6 bis 9, des Weiteren umfassend das Auslösen einer Warnaktivität, falls das weit ausholende Abbiegemanöver detektiert wird (S8, S8b).

11. Verfahren nach einem der Ansprüche 6 bis 10, des Weiteren umfassend das Detektieren einer Ampel (46) und eines entsprechenden Ampelstatus und das Auslösen eines Stillstands, wenn die Ampel (46) von Rot auf Grün umschaltet, falls das weit ausholende Abbiegemanöver detektiert wird.

12. Verfahren nach Anspruch 11, wobei der Stillstand für eine vordefinierte Zeit ausgelöst wird.

13. Datenverarbeitungsvorrichtung (20), umfassend ein Mittel (30) zum Ausführen mindestens eines der Verfahren der vorangehenden Ansprüche.

14. Computerprogramm (28), umfassend Instruktionen, die, wenn das Computerprogramm (28) durch einen Computer ausgeführt wird, den Computer veranlassen, mindestens eines der Verfahren nach den Ansprüchen 1 bis 12 auszuführen.

15. Computerlesbares Speichermedium (26), umfassend Instruktionen, die, wenn sie durch einen Computer ausgeführt werden, den Computer veranlassen, mindestens eines der Verfahren nach den Ansprüchen 1 bis 12 auszuführen.

## Revendications

1. Procédé mis en œuvre par ordinateur pour détecter une manoeuvre de virage large d'un véhicule (18) circulant sur un segment de route (34) devant un véhicule égo (16) qui circule sur une voie égo (32) connue du même segment de route (34), la manoeuvre de virage large étant une manoeuvre de virage à droite commençant à l'extérieur de la voie la plus à droite ou la manoeuvre de virage large étant une manoeuvre de virage à gauche commençant à l'extérieur de la voie la plus à gauche, le procédé étant exécuté sur le véhicule égo (16) ou du point de vue du véhicule égo (16) et le procédé comprenant de :
- détecter un état des indicateurs de direction du véhicule (18), l'état des indicateurs de direction décrivant si l'indicateur de direction gauche uniquement, l'indicateur de direction droit uniquement, l'indicateur de direction gauche et l'indicateur de direction droit ou aucun des indicateurs de direction n'est/ne sont activé(s) (S3),
- détecter un état de voie du véhicule (18), l'état de voie décrivant une voie du segment de route (34) sur lequel le véhicule (18) circule (S4),
- recevoir une information de distance de virage (D) décrivant une distance jusqu'à un prochain virage et comparer l'information de distance de virage (D) à un seuil de distance de virage (S6),
- déterminer que le véhicule (18) effectue la manoeuvre de virage large (S7),
o si l'état des indicateurs de direction décrit que l'indicateur de direction gauche uniquement est activé, que l'état de voie décrit que le véhicule (18) circule sur une voie située à droite de la voie égo (32) et que l'information de distance de virage (D) est inférieure au seuil de distance de virage, ou
o si l'état des indicateurs de direction décrit que l'indicateur de direction droit uniquement est activé, que l'état de voie décrit que le véhicule (18) circule sur une voie située à gauche de la voie égo (32) et que l'information de distance de virage (D) est inférieure au seuil de distance de virage.

2. Procédé selon la revendication 1, comprenant en outre de détecter une caractéristique d'identification du véhicule (18) et à dériver un type de véhicule (18) et/ou une longueur du véhicule (18) sur la base de la caractéristique d'identification (S1), l'exécution de la manoeuvre de virage large n'étant déterminée que si le type de véhicule (18) correspond à un type prédéfini ou si la longueur du véhicule (18) dépasse un seuil de longueur.

3. Procédé selon la revendication 2, comprenant en outre de comparer la longueur dérivée du véhicule (18) à l'information de distance de virage reçue (D), l'exécution de la manoeuvre de virage large n'étant déterminée que si un rapport de la longueur dérivée du véhicule (18) sur l'information de distance de virage reçue (D) dépasse un seuil de rapport prédéfini.

4. Procédé selon l'une quelconque des revendications précédentes, comprenant en outre de détecter une vitesse du véhicule (18) et/ou un gradient de vitesse du véhicule (S5), l'exécution d'une manoeuvre de virage large n'étant déterminée que si la vitesse détectée est inférieure à un seuil de vitesse et/ou si le gradient de vitesse dépasse un seuil de gradient de vitesse, respectivement.

5. Procédé selon l'une quelconque des revendications précédentes, comprenant en outre de recevoir un état de possibilité de virage spécifique à une zone décrivant si, dans une zone spécifique, il existe une possibilité d'exécuter la manoeuvre de virage large (S2), l'exécution de la manoeuvre de virage large n'étant déterminée que si l'état de possibilité de virage spécifique à une zone est positif.

6. Procédé de fonctionnement d'un véhicule égo (16) comprenant l'exécution du procédé pour détecter la manoeuvre de virage large d'un véhicule (18) selon l'une quelconque des revendications précédentes.

7. Procédé selon la revendication 6, comprenant en outre de déclencher un maintien d'une distance de sécurité (X) par rapport au véhicule (18) si la manoeuvre de virage large est détectée (S8, S8a).

8. Procédé selon la revendication 7, dans lequel la distance de sécurité (X) est déclenchée pour une durée prédéfinie.

9. Procédé selon l'une quelconque des revendications 6 à 8, comprenant en outre de transmettre une information d'état de virage large à une entité de commande centrale (40) ou à un autre véhicule, si la manoeuvre de virage large est détectée (S8, S8c).

10. Procédé selon l'une quelconque des revendications 6 à 9, comprenant en outre de déclencher une activité d'avertissement si la manoeuvre de virage large est détectée (S8, S8b).

11. Procédé selon l'une quelconque des revendications 6 à 10, comprenant en outre de détecter un feu de circulation (46) et un état de feu de circulation correspondant, et à déclencher un arrêt lorsque le feu de circulation (46) passe du rouge au vert si la manoeuvre de virage large est détectée.

12. Procédé selon la revendication 11, dans lequel l'arrêt est déclenché pour une durée prédéfinie.

13. Appareil de traitement de données (20) comprenant des moyens (30) pour mettre en œuvre au moins l'un des procédés selon les revendications précédentes.

14. Programme d'ordinateur (28) comprenant des instructions qui, lorsque le programme d'ordinateur (28) est exécuté par un ordinateur, amènent l'ordinateur à mettre en œuvre au moins l'un des procédés selon les revendications 1 à 12.

15. Support de stockage lisible par ordinateur (26) comprenant des instructions qui, lorsqu'elles sont exécutées par un ordinateur, amènent l'ordinateur à mettre en œuvre au moins l'un des procédés selon les revendications 1 à 12.
